# EUROPÄISCHE PATENTSCHRIFT

(11) **EP 3 616 027 B1**
(45) Veröffentlichungstag und Bekanntmachung des Hinweises auf die Patenterteilung: **05.08.2020**
(21) Anmeldenummer: 18773143.5
(22) Anmeldetag: 18.09.2018
(51) Int. Cl.: G06F 1/28, B60R 16/03, G06F 1/32

(54) **VERFAHREN ZUM STEUERN EINES NIEDRIGVERBRAUCHSMODUS EINER ELEKTRONISCHEN SCHALTUNGSEINHEIT SOWIE STEUERGERÄT UND KRAFTFAHRZEUG**
METHOD FOR CONTROLLING A LOW CONSUMPTION MODE OF AN ELECTRONIC CIRCUIT UNIT, CONTROL DEVICE, AND MOTOR VEHICLE
PROCÉDÉ DESTINÉ À COMMANDER UN MODE À BASSE CONSOMMATION D'UNE UNITÉ DE CIRCUIT ÉLECTRONIQUE ET APPAREIL DE COMMANDE ET VÉHICULE AUTOMOBILE

(30) Priorität: 27.09.2017 DE 102017217239
(43) Veröffentlichungstag der Anmeldung: 04.03.2020
(73) Patentinhaber: Audi AG, 85045 Ingolstadt (DE)
(72) Erfinder: DALKE, Christoph, 85110 Kipfenberg (DE); DEPNER, Daniel, 93073 Neutraubling (DE)
(86) Internationale Anmeldenummer: PCT/EP2018/075114
(87) Internationale Veröffentlichungsnummer: WO 2019/063340

(56) Entgegenhaltungen:
- EP-A2- 1 145 494
- US-A1- 2016 248 262

## Beschreibung

Die Erfindung betrifft ein Verfahren zum Steuern eines Niedrigverbrauchsmodus (z.B. eines Low-Power-Modus) einer elektronischen Schaltungseinheit. Mit dem Niedrigverbrauchsmodus soll eine Stromstärke eines elektrischen Betriebsstroms der Schaltungseinheit reduziert werden. Der Niedrigverbrauchsmodus wird durch eine schaltungsexterne Leistungssteuereinheit (Power Controller) ausgelöst. Zu der Erfindung gehören auch ein Steuergerät mit der Schaltungseinheit und der Leistungssteuereinheit sowie ein Kraftfahrzeug.

Ein Steuergerät mit einer elektronischen Schaltungseinheit und einer Leistungssteuereinheit ist beispielsweise aus der DE 10 2014 008 479 A1 bekannt. Darin ist ein Steuergerät für ein Kraftfahrzeug beschrieben, das als elektronische Schaltungseinheit ein sogenanntes System-on-Chip (SOC) aufweist. Ein Energiemanagement kann durch eine separate Leistungssteuereinheit durchgeführt werden, welche entscheidet, welche Schaltungseinheit des Steuergeräts aktuell mit einem Betriebsstrom versorgt werden soll oder nicht. Hierdurch kann aber eine Schaltungseinheit nur eingeschaltet oder ausgeschaltet werden. Wird eine Schaltungseinheit durchgehend betrieben und soll hierbei ihr Stromverbrauch mittels eines Niedrigverbrauchsmodus reduziert werden, so kann von der Leistungssteuereinheit aus nicht überprüft werden, ob die Schaltungseinheit tatsächlich ihren Stromverbrauch reduziert oder ober der Stromverbrauch beispielsweise aufgrund eines Fehlers in einer Steuersoftware der Schaltungseinheit unverändert hoch bleibt.

Aus der DE 10 2014 003 704 A1 ist ebenfalls ein Energiemanagement für eine Schaltungseinheit bekannt. Das Energiemanagement wird durch eine Leistungssteuereinheit (Power Controller) ausgeführt. Die Leistungssteuereinheit kann einen Aktivierungsbefehl zum Aktivieren eines Niedrigverbrauchsmodus an die Schaltungseinheit aussenden. Die Schaltungseinheit kann daraufhin den Niedrigverbrauchsmodus aktivieren und hierdurch die Stromstärke ihres Betriebsstroms reduzieren. Falls aufgrund eines Fehlers beispielsweise in einem Betriebssystem der Schaltungseinheit nach Empfang des Aktivierungsbefehls der Niedrigverbrauchsmodus nicht aktiviert wird, bleibt der Stromverbrauch der Schaltungseinheit unverändert hoch, ohne dass dies durch die Leistungssteuereinheit erkannt würde.

Aus der US 2010/0064124 A1 ist bekannt, dass eine Leistungssteuereinheit (Power Controller) einen Strompfad einer Schaltungseinheit unterbrechen kann, indem in den Strompfad ein Gleichspannungswandler geschaltet ist. Mittels des Gleichspannungswandlers kann auch eine Stromstärke des aktuell von der Schaltungseinheit bezogenen elektrischen Betriebsstroms erfasst werden. Mittels dieser Leistungssteuereinheit kann allerdings eine Schaltungseinheit nur extern, nämlich indirekt durch Einstellen der Stromstärke mittels des Gleichspannungswandlers gesteuert werden. Eine direkte Koordination mit der über den Gleichspannungswandler versorgten Schaltungseinheit ist nicht vorgesehen.

Ein Niedrigverbrauchsmodus kann also bei einer elektronischen Schaltungseinheit vorgesehen sein, um die Schaltungseinheit beispielsweise nach einer vorbestimmten Zeitspanne, während welcher die Schaltungseinheit unbenutzt ist, in ihrem elektrischen Leistungsverbrauch zu reduzieren. Dazu kann durch einen Powercontroller, das heißt eine schaltungsexterne Leistungssteuereinheit, ein Aktivierungsbefehl zum Aktivieren des Niedrigverbrauchsmodus an die elektronische Schaltungseinheit ausgesendet werden. Diese muss dann mit dem Aktivieren des Niedrigverbrauchsmodus reagieren. Ein Niedrigverbrauchsmodus kann softwaregesteuert sein, wie dies beispielsweise bei dem Suspend-to-RAM-Modus der Fall ist, bei welchem ein Betrieb der elektronischen Schaltungseinheit unterbrochen wird und ihr aktueller Betriebszustand in einem RAM-Speicher (RAM - Random Access Memory) konserviert wird. Danach wird beispielsweise durch eine Treibersoftware der elektronischen Schaltungseinheit dafür gesorgt, dass die Schaltungseinheit bis auf ihren RAM-Speicher stromlos geschaltet wird. Hierzu kann durch die Treibersoftware ein PMIC (Power Management Integrated Circuit) der Schaltungseinheit angesteuert werden. Weist eine solche Treibersoftware aber einen Fehler auf, so kann es sein, dass das Abschalten von Komponenten der Schaltungseinheit nicht erfolgt. Dann ist zwar der Betrieb der Schaltungseinheit unterbrochen, ihr Stromverbrauch aber unverändert hoch.

Dies ist insbesondere dann problematisch, wenn die elektronische Schaltungseinheit mit elektrischer Leistung aus einem Energiespeicher, beispielsweise einer Batterie, versorgt wird. Insbesondere bei einem Kraftfahrzeug kann dies der Fall sein, wenn in einem Steuergerät eine solche elektronische Schaltungseinheit in einem Niedrigverbrauchsmodus betrieben werden soll, weil das Kraftfahrzeug beispielsweise abgeschaltet oder ausgeschaltet ist und somit das Steuergerät ausschließlich über die Batterie des Kraftfahrzeugs mit elektrischer Leistung versorgt werden kann. Ein Beispiel für ein solches Steuergerät mit elektronischer Schaltungseinheit, die im Niedrigverbrauchsmodus betrieben werden kann, ist ein Infotainmentsystem (Informations-Unterhaltungssystem). Scheitert das Einleiten des Niedrigverbrauchsmodus, so wird die Batterie unnötig entladen.

Aus der DE 103 12 553 B3 ist bekannt, dass mehrere Steuergeräte nach ihrem Abschalten zusammen darauf hin überwacht werden können, ob zumindest eines der Steuergeräte immer noch einen Stromverbrauch aufweist, der über einem Schwellenwert liegt. Je nach gemessener Gesamtstromstärke wird auf dasjenige Steuergerät mit dem fehlerhaften Ruhezustand rückgeschlossen, durch welchen das Steuergerät weiterhin seinen normalen Betriebsstrom verbraucht. Hierzu ist für jedes Steuergerät in einer Tabelle abgespeichert, welchen Betriebsstrom es verbraucht.

Aus der DE 198 30 581 A1 ist bekannt, eine Kraftfahrzeug-Funktion, beispielsweise einen Scheibenwischer, redundant zu schalten. Mikroprozessoren der Schaltung können unterschiedliche Ruhemodi aufweisen, beispielsweise einen Schlafmodus und einen Verschiffungsmodus.

Aus der DE 10 2014 019 435 A1 ist bekannt, dass ein Infotainmentsystem als mögliche Ruhemodi einen Suspend-to-RAM-Zustand und einen Tiefschlafzustand aufweisen kann. Es ergeben sich je nach Ruhemodus unterschiedliche Stromstärken für den Ruhestrom.

Die US 2016/0248262 A1 offenbart, dass, wenn ein Energiesparmodus aktiviert wurde, ein Vorliegen einer Aufwachbedingung abgefragt wird und in Abhängigkeit dieser Abfrage überprüft wird, ob eine Anomalie in dem Dunkelstrom vorliegt.

Aus der EP 1 145 494 A2 ist eine lokale Netzwerkstruktur (local area network) bekannt, mit einem Netzwerkknoten, einer Vielzahl von Knoten, Kommunikationskabeln, die die Vielzahl von Knoten mit dem Netzwerkknoten zur Datenübertragung verbinden, und einem Energieversorgungsverteiler zum Bereitstellen von Energie an die Vielzahl von Knoten über die Kommunikationskabel. Um einen Energieverbrauch der einzelnen der Vielzahl an Knoten zu überwachen, kann dabei der Strom für jeden einzelnen Knoten gemessen und der gemessene Strom mit einem vorgegebenen Referenzwert verglichen werden. Dabei kann zwischen einem Betriebszustand, einem Ruhezustand und einem Energie-sparzustand der Vielzahl an Knoten unterschieden werden.

Der Erfindung liegt die Aufgabe zugrunde, bei einer elektronischen Schaltungseinheit zuverlässig einen Niedrigverbrauchsmodus zu aktivieren.

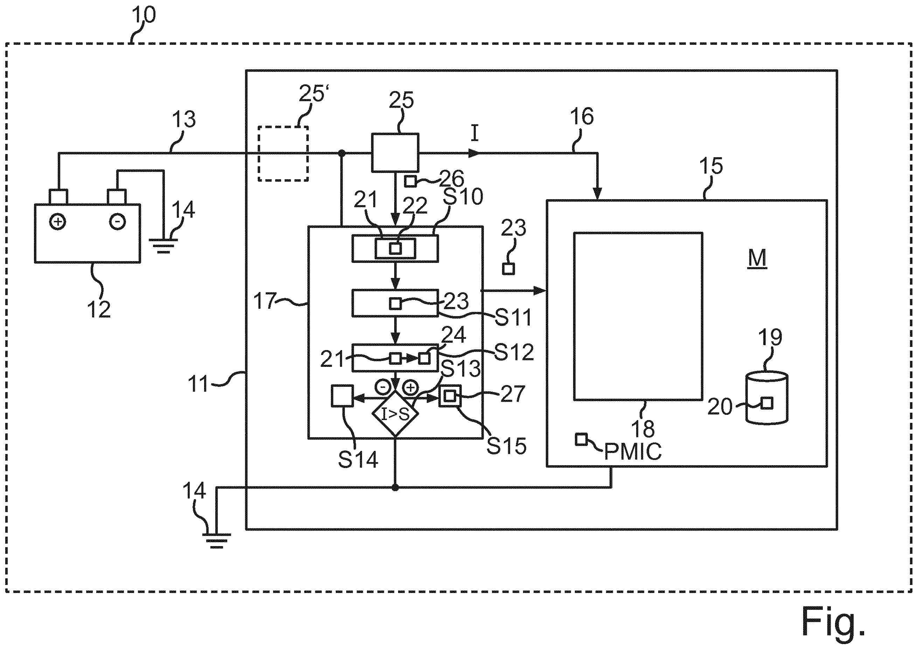

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figur beschrieben.

Durch die Erfindung ist ein Verfahren zum Steuern oder Einstellen eines Niedrigverbrauchsmodus einer elektronischen Schaltungseinheit bereitgestellt. Die elektronische Schaltungseinheit kann beispielsweise ein System-on-Chip, SOC, in einem Steuergerät sein. Das Verfahren geht davon aus, dass diese Schaltungseinheit über einen Strompfad mit einem elektrischen Betriebsstrom versorgt wird. Bei dem Verfahren wird durch eine schaltungsexterne Leistungssteuereinheit oder einen schaltungsexternen Powercontroller ein Aktivierungsbefehl zum Aktivieren des Niedrigverbrauchsmodus an die Schaltungseinheit ausgesendet. Mit "schaltungsextern" ist gemeint, dass die Leistungssteuereinheit und die elektronische Schaltungseinheit zwei unterschiedliche Einheiten darstellen, d.h. verschieden sind. Empfängt nun die elektronische Schaltungseinheit den Aktivierungsbefehl, so sollte sie bestimmungsgemäß den Niedrigverbrauchsmodus aktivieren, das heißt die Stromstärke ihres elektrischen Betriebsstroms sollte reduziert oder verringert werden. Liegt allerdings ein Fehler in der elektronischen Schaltungseinheit vor, so kann es sein, dass sie nicht korrekt oder vollständig auf den Aktivierungsbefehl reagiert und somit der Betriebsstrom nicht in der geplanten oder vorgesehenen Weise reduziert wird.

Erfindungsgemäß ist deshalb vorgesehen, dass in dem Strompfad, über welchen die elektronische Schaltungseinheit ihren Betriebsstrom empfängt, eine Messeinrichtung betrieben wird, die dazu eingerichtet ist, ein von einer Stromstärke des Betriebsstroms abhängiges Verbrauchssignal zu erzeugen. Eine solche Messeinrichtung kann in an sich aus dem Stand der Technik bekannter Weise ausgestaltet sein. Beispielsweise kann ein sogenannter Shunt-Widerstand vorgesehen sein, über welchen der Betriebsstrom oder ein Anteil des Betriebsstroms geführt ist.

Durch die Leistungssteuereinheit wird nach dem Aussenden des Aktivierungsbefehls anhand des Verbrauchsignals ermittelt, ob die Stromstärke des Betriebsstroms noch oberhalb eines für den Niedrigverbrauchsmodus vorgegebenen Schwellenwerts liegt. Die Leistungssteuereinheit überprüft also anhand des Verbrauchssignals, ob die Stromstärke des Betriebsstroms tatsächlich sinkt oder unterhalb des Schwellenwerts liegt, der unterschritten sein müsste, wenn der Niedrigverbrauchsmodus erfolgreich aktiviert wurde. Liegt die Stromstärke noch oberhalb des Schwellenwerts, so wird durch die Leistungssteuereinheit in diesem Fall eine vorbestimmte Notfallmaßnahme zum Erzwingen des Niedrigverbrauchsmodus und/oder zum Reduzieren der Stromstärke eingeleitet. Das Reduzieren der Stromstärke kann also entweder das Forcieren des Niedrigverbrauchsmodus oder auch eine alternative Schaltmaßnahme, die vom Niedrigverbrauchsmodus verschieden ist, vorsehen.

Durch die Erfindung ergibt sich der Vorteil, dass unabhängig von einem Fehler in der elektronischen Schaltungseinheit nach dem Aussenden des Aktivierungsbefehls sichergestellt werden kann, dass die elektronische Schaltungseinheit ihren Verbrauch an elektrischer Leistung reduziert, also die Stromstärke des Betriebsstroms verringert wird.

Die Erfindung sieht vor, dass der Niedrigverbrauchsmodus in Abhängigkeit von einer aktuellen Betriebsstrategie aus mehreren vorgegebenen Niedrigverbrauchsmodi ausgewählt wird. Mit anderen Worten kann vorgesehen sein, dass mehrere unterschiedliche Stufen der Reduktion der Stromstärke des Betriebsstroms ermöglicht werden. Welcher Niedrigverbrauchsmodus, das heißt welche Stufe der Reduktion, aktuell mittels des Aktivierungsbefehls ausgelöst oder eingestellt werden soll, kann durch eine aktuelle Betriebsstrategie für die Schaltungseinheit festgelegt werden. Eine solche Betriebsstrategie kann beispielsweise ein stufenweises Reduzieren des Betriebsstroms mit der Zeit vorsehen, während welcher die Schaltungseinheit nicht benötigt wird. So wird entsprechend auch eine Reaktionszeit auf eine erneute Benutzung nur stufenweise verlängert. Wird also die Schaltungseinheit nur kurzzeitig nicht benötigt oder nicht bedient, so ist auch die Reaktionszeit bei einer erneuten Bedienung entsprechend gering. Ein erster vorgegebener Niedrigverbrauchsmodus kann ein Energiesparmodus sein. Ein zweiter vorgegebener Niedrigverbrauchsmodus kann ein Suspend-to-RAM-Modus sein. Die Auswahl des Niedrigverbrauchsmodus kann durch ein Energiemanagementfunktion der Leistungssteuereinheit getroffen werden, die z.B. als ein Programmodul der Leistungssteuereinheit realisiert sein kann. Bei der Erfindung ist nun vorgesehen, dass zu jedem der vorgegebenen Niedrigverbrauchsmodi ein Modus-spezifischer Schwellenwert für die Stromstärke bereitgestellt wird. Hierdurch ergibt sich der Vorteil, dass die Messempfindlichkeit oder Sensitivität der Leistungssteuereinheit an den Niedrigverbrauchsmodus angepasst wird. Für den Suspend-to-RAM-Modus kann ein Schwellenwert im Bereich von 8 mA bis 20 mA vorgesehen sein. Für den Energiesparmodus kann ein Schwellenwert im Bereich von 120 mA bis 200 mA vorgesehen sein.

Zu der Erfindung gehören auch Ausführungsformen, durch die sich zusätzliche Vorteile ergeben.

Gemäß einer Ausführungsform umfasst die Notfallmaßnahme das Abschalten der Schaltungseinheit. Hierdurch ist unabhängig von einem aktuellen Betriebszustand der elektronischen Schaltungseinheit, insbesondere unabhängig von einem aktuellen Fehlerzustand, sichergestellt, dass der Betriebsstrom unter den Schwellenwert reduziert oder gesenkt wird. Alternativ dazu kann die Notfallmaßnahme das Auslösen eines Neustarts (Reset) der Schaltungseinheit umfassen. Hierdurch ergibt sich der Vorteil, dass die elektronische Schaltungseinheit danach erneut mittels eines Aktivierungsbefehls in den Niedrigverbrauchsmodus gesteuert werden kann und somit die Schaltungseinheit einen definierten Betriebszustand erreicht. Die Notfallmaßnahme kann auch zunächst das Auslösen des Neustarts und bei einem erneuten Misserfolg (Stromstärke bleibt weiterhin oberhalb des Schwellenwerts) das Abschalten vorsehen.

Eine Ausführungsform sieht vor, dass als Niedrigverbrauchsmodus ein Energiesparmodus (Low-Power-Modus) der Schaltungseinheit mittels des Aktivierungsbefehls aktiviert wird. In dem Energiesparmodus wird die Schaltungseinheit bei einem im Vergleich zu einem Normalbetriebsmodus verringerten Prozessortakt einer Prozessoreinrichtung der Schaltungseinheit weiterbetrieben. Hierdurch ergibt sich der Vorteil, dass zumindest eine Funktion der Schaltungseinheit weiterhin verfügbar bleibt. Sie wird nur verlangsamt umgesetzt. Alternativ dazu kann als Niedrigverbrauchsmodus ein Suspend-to-RAM-Modus aktiviert werden, in welchem ein Betrieb der Schaltungseinheit unterbrochen und aber ein Betriebszustand der Schaltungseinheit in einem RAM-Speicher konserviert wird. Hierdurch ergibt sich der Vorteil, dass ausschließlich der RAM-Speicher mit dem Betriebsstrom weiter versorgt werden muss, während eine Prozessoreinrichtung der Schaltungseinheit, beispielsweise eine CPU (Zentrale Recheneinheit, Central Processing Unit), abgeschaltet werden kann. Hierdurch wird die Stromstärke des Betriebsstroms stärker reduziert als in einem Energiesparmodus.

Es ist vorgesehen, dass das Überprüfen der Stromstärke des Betriebsstroms in Abhängigkeit von einem Zustand-erreicht-Signal der Energiemanagementfunktion der Leistungssteuereinheit begonnen wird, wobei das Zustand-erreicht-Signal signalisiert, dass die Schaltungseinheit den Niedrigverbrauchsmodus erwartungsgemäß erreicht haben sollte. Hierdurch wird ein falscher Alarm aufgrund einer zu frühen Messung der Stromstärke verhindert. Die Energiemanagementfunktion kann in Abhängigkeit beispielsweise eines Typs der Schaltungseinheit eine vorbestimmte Wartezeit vorsehen, die zwischen dem Aussenden des Aktivierungsbefehls und dem Erzeugen des Zustand-erreicht-Signals vergehen muss, bevor die Stromstärke des Betriebsstroms überprüft wird.

Eine Ausführungsform sieht vor, dass anhand des Verbrauchssignals die Stromstärke mehrfach oder zyklisch überprüft wird. Hierdurch kann eine Variabilität oder Toleranz kompensiert werden, die sich beim Erreichen des Niedrigverbrauchsmodus in der Schaltungseinheit ergeben kann. Beispielsweise kann unterschiedlich viel Zeit für das Einstellen des Niedrigverbrauchsmodus in der Schaltungseinheit vergehen, wenn unterschiedlich viele Applikationen in der Schaltungseinheit aktiv sind, während der Aktivierungsbefehl eintrifft.

Eine Ausführungsform sieht vor, dass durch die Messeinrichtung die Stromstärke mit einer Messgenauigkeit erfasst wird, die in einem Bereich größer als 1 mA, insbesondere größer als 3 mA, liegt. Mit anderen Worten muss die Messgenauigkeit nicht sehr groß sein. Es reicht festzustellen, ob der Schwellenwert unterschritten ist oder nicht. Hierdurch kann eine preisgünstige Messeinrichtung bereitgestellt oder genutzt werden. Auf den genauen Verbrauchswert des Betriebsstroms kommt es nicht an. Der Schwellenwert kann dann mit einer entsprechenden Toleranz versehen sein.

Es ist vorgesehen, dass sich die Leistungssteuereinheit für den Fall, dass die Stromstärke unterhalb des Schwellenwerts liegt, selbst deaktiviert, also zum Beispiel abschaltet oder zumindest einen Systemtakt reduziert. Hierdurch ergibt sich der Vorteil, dass der Bedarf an elektrischer Leistung weiter reduziert wird.

Wie bereits ausgeführt, sind die elektronische Schaltungseinheit und die Leistungssteuereinheit insbesondere Bestandteil eines Steuergeräts. Entsprechend sieht die Erfindung auch ein Steuergerät mit der elektronischen Schaltungseinheit und mit einer davon verschiedenen Leistungssteuereinheit (Powercontroller) vor. Die Schaltungseinheit kann beispielsweise eine elektronische Schaltung oder ein integrierter Schaltkreis (IC - Integrated Circuit) oder ein System-on-Chip (SOC) sein. Bei dem Steuergerät ist ein Strompfad bereitgestellt, um die Schaltungseinheit mit einem elektrischen Betriebsstrom zu versorgen. Der Versorgungspfad kann beispielsweise auf der Grundlage zumindest einer Leiterbahn einer Schaltungsplatine und/oder zumindest eines Kabels gebildet sein. Der Versorgungspfad kann auch ganz oder teilweise in einem SOC verlaufen. Bei dem erfindungsgemäßen Steuergerät ist in dem Strompfad eine Messeinrichtung zum Erzeugen eines von einer Stromstärke des Betriebsstroms abhängigen Verbrauchssignals bereitgestellt. In der beschriebenen Weise kann die Messeinrichtung gemäß dem Stand der Technik ausgestaltet sein. Beispielsweise kann in den Strompfad der besagte Shunt-Widerstand geschaltet sein. Das Steuergerät ist dazu eingerichtet, eine Ausführungsform des erfindungsgemäßen Verfahrens durchzuführen. Hierzu kann die Leistungseinheit beispielsweise eine Prozessoreinrichtung, wie beispielsweise zumindest einen Mikrocontroller oder zumindest einen Mikroprozessor, aufweisen. Es kann ein Programmcode bereitgestellt sein, der dazu eingerichtet ist, bei Ausführen durch die Prozessoreinrichtung die die Leistungseinheit betreffenden Schritte des erfindungsgemäßen Verfahrens durchzuführen. Der Programmcode kann in einem Datenspeicher der Prozessoreinrichtung gespeichert sein.

Wie bereits ausgeführt, ist das erfindungsgemäße Verfahren besonders vorteilhaft für den Fall, dass die Schaltungseinheit mit einem Betriebsstrom aus einem Energiespeicher, wie beispielsweise einer Batterie, versorgt ist. In diesem Zusammenhang sieht die Erfindung auch ein Kraftfahrzeug vor, das zumindest ein Steuergerät aufweist, das eine Ausführungsform des erfindungsgemäßen Steuergeräts ist. Hierdurch kann im batteriebetriebenen Zustand des Kraftfahrzeugs, beispielsweise bei ausgeschalteter Zündung, sichergestellt werden, dass das Steuergerät seinen Bedarf an elektrischer Leistung zuverlässig reduzieren kann. Das erfindungsgemäße Kraftfahrzeug kann als Kraftwagen, insbesondere als Personenkraftwagen oder Lastkraftwagen, ausgestaltet sein.

Im Folgenden ist ein Ausführungsbeispiel der Erfindung beschrieben. Hierzu zeigt die einzige Figur (Fig.) eine schematische Darstellung einer Ausführungsform des erfindungsgemäßen Kraftfahrzeugs.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Die Figur zeigt ein Kraftfahrzeug 10, bei dem es sich um einen Kraftwagen, insbesondere einen Personenkraftwagen oder Lastkraftwagen, handeln kann. Das Kraftfahrzeug 10 kann ein Steuergerät 11 aufweisen, bei dem es sich zum Beispiel um ein Steuergerät für ein Infotainmentsystem handeln kann. Das Steuergerät 11 kann über einen Energiespeicher 12, beispielsweise eine Batterie, mit elektrischer Leistung versorgt werden. Dies kann beispielsweise der Fall sein, wenn das Kraftfahrzeug 10 rein elektrisch angetrieben wird oder wenn ein Verbrennungsmotor des Kraftfahrzeugs 10 ausgeschaltet ist. Für die Versorgung kann das Steuergerät 11 mit dem Energiespeicher 12 über ein elektrisches Bordnetz 13 verschaltet sein, das hier nur symbolisch angedeutet ist. Ein Stromkreis kann über ein Massepotential 14 des Kraftfahrzeugs 10 geschlossen sein.

Das Steuergerät 11 kann eine elektronische Schaltungseinheit 15 aufweisen, bei der es sich beispielsweise um ein SOC (System-on-Chip) handeln kann. In dem Steuergerät 11 kann die Schaltungseinheit 15 einen Betriebsstrom I für den Betrieb über einen Strompfad 16 empfangen, der beispielsweise auf der Grundlage zumindest einer Leiterbahn einer Schaltungsplatine und/oder eines Kabels gebildet sein kann. Der Versorgungspfad kann auch ganz oder teilweise in einem SOC verlaufen.

Das Steuergerät 11 kann des Weiteren eine Leistungssteuereinheit 17 aufweisen. Die Leistungssteuereinheit 17 stellt einen Powercontroller oder Leistungscontroller dar.

Zur Verringerung eines Leistungsverbrauchs kann die Schaltungseinheit 15 einen Niedrigenergiemodus M aufweisen, in welchem beispielsweise eine Prozessoreinrichtung 18 der Schaltungseinheit 15 mit einem im Vergleich zu einem Normalbetriebsmodus reduzierten Systemtakt betrieben wird oder in welchem in einem RAM-Speicher 19 Zustandsdaten 20, die einen Betriebszustand der Schaltungseinheit 15 beschreiben, gespeichert werden und dann die Prozessoreinrichtung 18 stromlos geschaltet wird. Die Prozessoreinrichtung 18 kann beispielsweise eine CPU der Schaltungseinheit 15 umfassen.

Wann der Niedrigverbrauchsmodus M der Schaltungseinheit 15 aktiviert wird, kann durch die Leistungssteuereinheit 17 entschieden und/oder gesteuert werden. Hierzu kann in einem Schritt S10 eine Energiemanagementfunktion 21 der Leistungssteuereinheit 17 ein Aktivierungskriterium 22 überprüfen, das beispielsweise besagen kann, dass der Niedrigverbrauchsmodus M zu aktivieren ist, falls das Steuergerät 11 für eine vorbestimmte Mindestzeitdauer unbedient oder ungenutzt ist. In einem Schritt S11 kann die Leistungssteuereinheit 17 bei erfülltem Aktivierungskriterium 22 einen Aktivierungsbefehl 23 an die Schaltungseinheit 15 aussenden. Der Aktivierungsbefehl 15 kann beispielsweise über einen UART-Port (Universal Asynchronous Receiver Transmitter) und/oder über ein SPI (Serial Peripheral Interface) und/oder über einen GPIO-Port (GPIO - General Purpose Input Output) und/oder über einen I2C-Bus (I2C - IC to IC; IC - Integrated Circuit) übertragen werden.

Durch die Energiemanagementfunktion 21 kann in einem Schritt S12 durch ein Zustand-erreicht-Signal 24 signalisiert werden, wann die Schaltungseinheit 15 erwartungsgemäß den Niedrigverbrauchsmodus M erreicht haben sollte.

Die Leistungssteuereinheit 17 kann dann überprüfen, ob die Schaltungseinheit 15 den Niedrigverbrauchsmodus M tatsächlich erreicht hat. Hierzu kann in den Strompfad 16 eine Messeinrichtung 25 geschaltet sein, die dazu eingerichtet ist, ein von der Stromstärke des Betriebsstroms I abhängiges Verbrauchssignal 26 zu erzeugen. In einem Schritt S13 kann überprüft werden, ob die Stromstärke des Betriebsstroms I größer als ein Schwellenwert S ist (I>S), der für den Niedrigverbrauchsmodus M vorgesehen sein kann. Ist die Stromstärke kleiner als der Schwellenwert S (in der Figur durch ein "-"-Zeichen symbolisiert), so kann in einem Schritt S14 auch ein Stromsparmodus für die Leistungssteuereinheit 17 selbst aktiviert werden oder die Leistungssteuereinheit 17 ausgeschaltet werden. Ist dagegen die Stromstärke des Betriebsstroms I größer als der Schwellenwert S (in der Figur durch ein "+"-Zeichen symbolisiert), so kann in einem Schritt S15 eine vorbestimmte Notfallmaßnahme 27 aktiviert werden. Die Notfallmaßnahme 27 kann vorsehen, dass die Schaltungseinheit 15 ausgeschaltet wird, also der Betriebsstrom I unterbrochen wird, oder dass die Schaltungseinheit 15 neu gestartet wird.

Wird durch ein externes Signal oder (bei weiter betriebener Leistungssteuereinheit 17) durch die Energiemanagementfunktion 21 erkannt, dass die Schaltungseinheit 15 wieder in den Normalbetriebsmodus wechseln soll, so kann eine an sich aus dem Stand der Technik bekannte Maßnahme zum Aktivieren des Normalbetriebsmodus der Schaltungseinheit ausgeführt werden.

Somit wird also für die Leistungssteuereinheit 17 eine Stromüberwachung bereitgestellt, diese überwacht die Stromaufnahme der Schaltungseinheit 15 mit dem RAM-Speicher 19 oder alternativ dazu auch des gesamten Steuergeräts 10 (in der Figur durch die Position 25' symbolisiert). Die Genauigkeit der Messung ist dabei zweitrangig und muss lediglich in einem Bereich von 1 mA bis 10 mA Messbereich liegen und kann kostengünstig ausgeführt werden.

Wenn die Schaltungseinheit 15 in dem Niedrigverbrauchsmodus M (beispielsweise einem Suspend-to-RAM-Modus) ist, kann die Leistungssteuereinheit 17 sich selbst in den Schlaf-Zustand oder Energiesparzustand versehen. Zuvor erfolgt aber eine zyklische Messung der Stromaufnahme mittels des Verbrauchssignals 26 der Messeinrichtung 25. Zusätzlich können Informationen aus der Energiemanagementfunktion 21 genutzt werden, beispielsweise das Zustand-erreicht-Signal 24. Sodann kann auf Grundlage des Schwellenwerts S überprüft werden, ob die Stromstärke des Betriebsstroms I der Schaltungseinheit 15 den Grenzwert überschreitet, obwohl die Energiemanagementfunktion 21 meldet, dass der Niedrigverbrauchsmodus M erreicht sein sollte. In diesem Fall kann die Notfallmaßnahme 27 ergriffen werden. Dies würde zum Beispiel zum Abschalten oder Neustart der Schaltungseinheit 15 führen, indem beispielsweise das gesamte Steuergerät 16 entsprechend angesteuert wird.

Durch die Stromüberwachung kann eine Leistungssteuereinheit prüfen, ob der Niedrigverbrauchsmodus M (zum Beispiel Suspend-to-RAM) sicher erreicht wurde. Da die Prüfung, das heißt die Verfahrensschritte S10 bis S15, in Software als Programmcode stattfinden kann, lässt sich die Leistungssteuereinheit 17 mit geringem Aufwand für verschiedene Schaltungseinheiten und/oder Hardwarevarianten einer Schaltungseinheit anpassen, indem ein entsprechender Schwellenwert S für die Stromstärke des Betriebsstroms I definiert wird. Die Logik bleibt gleich und ist von der überwachten Schaltungseinheit 15 unabhängig.

Zum Einstellen des Niedrigverbrauchsmodus M kann die Schaltungseinheit 15 ein PMIC (Power Management Integrated Circuit) aufweisen.

Der Niedrigverbrauchsmodus M kann ein Energiesparmodus oder ein Suspend-to-RAM-Modus sein. Als Schwellenwert für den Energiesparmodus kann beispielsweise 150 mA vorgesehen sein. Als Schwellenwert für den Suspend-to-RAM-Modus kann beispielsweise 10 mA vorgesehen sein.

Die Energiemanagementfunktion 21 kann den einzustellenden oder zu aktivierenden Niedrigverbrauchsmodus M aus mehreren vorgegebenen Niedrigverbrauchsmodi auswählen.

Insgesamt zeigen die Beispiele, wie durch die Erfindung eine Suspend-to-RAM-Überwachung bereitgestellt werden kann.

## Patentansprüche

1. Verfahren zum Steuern eines Niedrigverbrauchsmodus (M) einer elektronischen Schaltungseinheit (15), die über einen Strompfad (16) mit einem elektrischen Betriebsstrom (I) versorgt wird, wobei durch eine schaltungsexterne Leistungssteuereinheit (17) ein Aktivierungsbefehl (23) zum Aktivieren des Niedrigverbrauchsmodus (M) an die Schaltungseinheit (15) ausgesendet wird, und wobei der Niedrigverbrauchsmodus (M) in Abhängigkeit von einer aktuellen Betriebsstrategie aus mehreren vorgegebenen Niedrigverbrauchsmodi ausgewählt wird, wodurch mehrere unterschiedliche Stufen der Reduktion der Stromstärke des Betriebsstroms ermöglicht werden, und zu jedem der vorgegebenen Niedrigverbrauchsmodi ein modus-spezifischer Schwellenwert (S) für die Stromstärke bereitgestellt wird, und
in dem Strompfad (16) eine Messeinrichtung (25) zum Erzeugen eines von einer Stromstärke des Betriebsstroms (I) abhängigen Verbrauchssignals (16) betrieben wird und durch die Leistungssteuereinheit (17) nach dem Aussenden des Aktivierungsbefehls (23) anhand des Verbrauchssignals (26) ermittelt wird, ob die Stromstärke noch oberhalb des für den Niedrigverbrauchsmodus (M) vorgegebenen Schwellenwerts (S) liegt, wobei
das Überprüfen der Stromstärke in Abhängigkeit von einem Zustand-erreicht-Signal (24) einer Energiemanagementfunktion (21) der Leistungssteuereinheit (17) begonnen wird, wobei das Zustand-erreicht-Signal (24) signalisiert, dass die Schaltungseinheit (15) den jeweiligen Niedrigverbrauchsmodus (M) erwartungsgemäß erreicht haben sollte, und für den Fall, dass die Stromstärke noch oberhalb des Schwellenwerts (S) liegt, durch die Leistungssteuereinheit (17) eine vorbestimmte Notfallmaßnahme (27) zum Erzwingen des Niedrigverbrauchsmodus (M) und/oder zum Reduzieren der Stromstärke eingeleitet wird, und sich die Leistungssteuereinheit (17) für den Fall, dass die Stromstärke unterhalb des Schwellenwerts (S) liegt, selbst deaktiviert (S14).

2. Verfahren nach Anspruch 1, wobei die Notfallmaßnahme (27) das Abschalten und/oder das Auslösen eines Neustarts der Schaltungseinheit (15) umfasst.

3. Verfahren nach einem der vorhergehenden Ansprüche, wobei als Niedrigverbrauchsmodus (M) ein Energiesparmodus, in welchen die Schaltungseinheit (15) bei einem im Vergleich zu einem Normalbetriebsmodus verringerten Prozessortakt weiter betrieben wird, oder ein Suspend-to-RAM-Modus, in welchem ein Betrieb der Schaltungseinheit (15) unterbrochen und ein Betriebszustand der Schaltungseinheit (15) in einem RAM-Speicher (19) konserviert wird, vorgesehen ist.

4. Verfahren nach einem der vorhergehenden Ansprüche, wobei anhand des Verbrauchssignals (26) die Stromstärke mehrfach oder zyklisch überprüft wird.

5. Verfahren nach einem der vorhergehenden Ansprüche, wobei durch die Messeinrichtung (25) die Stromstärke mit einer Messgenauigkeit erfasst wird, die ausreicht, um festzustellen, ob der Schwellenwert (S) unterschritten ist oder nicht und die in einem Bereich größer als 1 mA, insbesondere größer als 3 mA, liegt.

6. Steuergerät (11) mit einer elektronisches Schaltungseinheit (15) und mit einer davon verschiedenen Leistungssteuereinheit (17), wobei ein Strompfad (16) zum Versorgen der Schaltungseinheit (15) mit einem elektrischen Betriebsstrom (I) bereitgestellt ist,
**dadurch gekennzeichnet, dass**
in dem Strompfad (16) eine Messeinrichtung (25) zum Erzeugen eines von einer Stromstärke des Betriebsstroms (I) abhängigen Verbrauchssignals (26) bereitgestellt ist und das Steuergerät (11) dazu eingerichtet ist, ein Verfahren nach einem der vorhergehenden Ansprüche durchzuführen.

7. Kraftfahrzeug (10) mit zumindest einem Steuergerät (11) nach Anspruch 6.

## Claims

1. Method for controlling a low-consumption mode (M) of an electronic circuit unit (15) which is supplied, via a current path (16), with an electrical operating current (I), wherein an activation command (23) for activating the low-consumption mode (M) is sent to the circuit unit (15) by a circuit-external power control unit (17), and wherein the low-consumption mode (M) is selected depending on a current operating strategy from several predefined low-consumption modes, as a result of which several different stages of reduction of the amperage of the operating current are enabled, and a mode-specific threshold value (S) for the amperage is provided for each of the predefined low-consumption modes, and
a measurement device (25) for generating a consumption signal (16) dependent on an amperage of the operating current (I) is operated in the current path (16) and the power control unit (17), after sending the activation command (23), determines on the basis of the consumption signal (26) whether the amperage is still above the threshold value (S) predefined for the low-consumption mode (M), wherein
the checking of the amperage is started depending on a status-reached signal (24) of an energy management function (21) of the power control unit (17), wherein the status-reached signal (24) signals that the circuit unit (15) should have reached the respective low-consumption mode (M) as expected, and in the event that the amperage is still above the threshold value (S), a predetermined emergency measure (27) to enforce the low-consumption mode (M) and/or to reduce the amperage is initiated by the power control unit (17), and the power control unit (17) deactivates itself (S14) in the event that the amperage is below the threshold value (S).

2. Method according to claim 1, wherein the emergency measure (27) comprises switching off and/or triggering a restart of the circuit unit (15).

3. Method according to any of the preceding claims, wherein an energy-saving mode, in which the circuit unit (15) continues to be operated with a processor cycle which is reduced compared to a normal operating mode, or a suspend-to-RAM mode, in which an operation of the circuit unit (15) is interrupted and an operating state of the circuit unit (15) is preserved in a RAM memory (19), is provided as the low-consumption mode (M).

4. Method according to any of the preceding claims, wherein the amperage is checked several times or cyclically on the basis of the consumption signal (26).

5. Method according to any of the preceding claims, wherein the amperage is detected by the measurement device (25) with a measurement accuracy which is sufficient to determine whether or not the amperage has fallen below the threshold value (S) and which is in a range greater than 1 mA, in particular greater than 3 mA.

6. Control device (11) having an electronic circuit unit (15) and having a power control unit (17) which is different therefrom, wherein a current path (16) for supplying the circuit unit (15) with an electrical operating current (I) is provided,
**characterised in that**
a measurement device (25) for generating a consumption signal (26) dependent on an amperage of the operating current (I) is provided in the current path (16) and the control device (11) is configured to carry out a method according to any of the preceding claims.

7. Motor vehicle (10) having at least one control device (11) according to claim 6.

## Revendications

1. Procédé destiné à commander un mode à basse consommation (M) d'une unité de circuit électronique (15) qui est alimentée en un courant électrique de fonctionnement (I) par un chemin de courant (16) dans lequel un ordre d'activation (23) destiné à activer le mode à basse consommation (M) est envoyé à l'unité de circuit (15) par une unité de commande de puissance (17) externe au circuit, et dans lequel le mode à basse consommation (M) est choisi en fonction d'une stratégie de fonctionnement actuelle parmi plusieurs modes à basse consommation prédéterminés, ce qui permet d'avoir plusieurs niveaux de réduction différents de l'intensité de courant du courant de fonctionnement, et pour chacun des modes à basse consommation prédéterminés, une valeur seuil spécifique au mode (S) est fournie pour l'intensité de courant, et
dans le chemin de courant (16), un équipement de mesure (25) destiné à produire un signal de consommation (16) dépendant d'une intensité de courant du courant de fonctionnement (I) est actionné et est détecté sur la base du signal de consommation (26) par l'unité de commande de puissance (17) après que l'ordre d'activation (23) est envoyé si l'intensité de courant est encore supérieure à la valeur seuil (S) prédéterminée pour le mode à basse consommation (M), dans lequel
la vérification de l'intensité de courant commence en fonction d'un signal d'état atteint (24) d'une fonction de gestion d'énergie (21) de l'unité de commande de puissance (17), dans lequel le signal d'état atteint (24) signale que l'unité de circuit (15) devrait avoir atteint comme prévu le mode à basse consommation respectif (M), et dans le cas où l'intensité de courant est encore supérieure à la valeur seuil (S), une mesure d'urgence prédéterminée (27) est initiée par l'unité de commande de puissance (17) pour forcer le mode à basse consommation (M) et/ou pour réduire l'intensité de courant, et l'unité de commande de puissance (17) se désactive elle-même (S14) dans le cas où l'intensité de courant est inférieure à la valeur seuil (S).

2. Procédé selon la revendication 1, dans lequel la mesure d'urgence (27) comprend la désactivation et/ou le déclenchement d'un redémarrage de l'unité de circuit (15).

3. Procédé selon l'une quelconque des revendications précédentes, dans lequel est prévu comme mode à basse consommation (M) un mode d'économie d'énergie dans lequel l'unité de circuit (15) continue à fonctionner à une cadence de processeur réduite comparativement à un mode de fonctionnement normal, ou un mode « Suspend-to-RAM » dans lequel un fonctionnement de l'unité de circuit (15) est interrompu et un état de fonctionnement de l'unité de circuit (15) est conservé dans une mémoire RAM (19).

4. Procédé selon l'une quelconque des revendications précédentes, dans lequel sur la base du signal de consommation (26), l'intensité de courant est vérifiée plusieurs fois ou cycliquement.

5. Procédé selon l'une quelconque des revendications précédentes, dans lequel l'équipement de mesure (25) permet de détecter l'intensité de courant avec une précision de mesure qui suffit pour constater si la valeur seuil (S) est ou non dépassée et qui se situe dans une plage supérieure à 1 mA, en particulier supérieure à 3 mA.

6. Appareil de commande (11) doté d'une unité de circuit électronique (15) et d'une unité de commande de puissance (17) différente de celle-ci, dans lequel un chemin de courant (16) est fourni pour alimenter l'unité de circuit (15) avec un courant électrique de fonctionnement (I),
**caractérisé en ce que**
dans le chemin de courant (16) un équipement de mesure (25) destiné à produire un signal de consommation (26) dépendant d'une intensité de courant du courant de fonctionnement (I) est fourni et l'appareil de commande (11) est conçu pour réaliser un procédé selon l'une quelconque des revendications précédentes.

7. Véhicule automobile (10) doté d'au moins un appareil de commande (11) selon la revendication 6.
